Europäisches Patentamt

European Patent Office

Office européen des brevets

(11) Veröffentlichungsnummer: **0 360 889 B1**

## (12) EUROPÄISCHE PATENTSCHRIFT

(45) Veröffentlichungstag der Patentschrift: **04.03.92**

(21) Anmeldenummer: **88115846.3**

(22) Anmeldetag: **27.09.88**

(51) Int. Cl.⁵: **F24D 3/14**, F24D 13/02

---

(54) **Flächenheizelement.**

---

(43) Veröffentlichungstag der Anmeldung:
**04.04.90 Patentblatt 90/14**

(45) Bekanntmachung des Hinweises auf die
Patenterteilung:
**04.03.92 Patentblatt 92/10**

(84) Benannte Vertragsstaaten:
**AT DE ES FR GB GR IT**

(56) Entgegenhaltungen:
**WO-A-83/01992**
**DE-A- 3 032 968**
**DE-A- 3 541 191**

(73) Patentinhaber: **MARMOR IMPORT - EXPORT**
**RAINER ERTEL**
**Kropfersricht 20**
**W-8458 Sulzbach-Rosenberg(DE)**

(72) Erfinder: **Ertel, Rainer**
**Kropfersricht 20**
**W-8458 Sulzbach-Rosenberg(DE)**

(74) Vertreter: **Göbel, Matthias, Dipl.-Ing.**
**Pruppacher Hauptstrasse 5-7**
**W-8501 Pyrbaum-Pruppach(DE)**

---

EP 0 360 889 B1

## Beschreibung

Die Erfindung betrifft ein Flächenheizelement mit einem ebenen Plattenkörper, insbesondere aus Natur- oder Kunststein, dessen Plattenkörper in einer Seitenfläche im Abstand parallel nebeneinander eine Anzahl geradlinige Nuten und in den Endbereichen derselben kreuzende Quernuten aufweist und bei dem die Nuten und Quernuten gemeinsam ein mäanderförmig geschlungenes Heizelement aufnehmen sowie abgerundete Umlenkbereiche für das Heizelement aufweisen.

Es ist ein Flächenheizelement (vgl. DE-A-30 32 968) mit in einem ebenen Plattenkörper angeordnete Rillen für die Aufnahme eines Heizelements bekannt. Die Rillen sind dabei in aufwendiger Weise durch eine Vielzahl kreisringförmiger Nuten gebildet, von denen jeweils benachbarte Nuten einander überlappen, so daß das Heizelement entsprechend dem Verlauf der Ringnuten in diese gewunden einlegbar ist. Es ist weiter ein Flächenheizelement (vgl. DE-A-35 41 191) mit in einem Plattenkörper gradlinig angeordneten Rillen bekannt, die an entgegengesetzten Enden paarweise durch kreisringförmige Rillen miteinander verbunden sind. Das Einbringen der verschiedenartigen Rillen erfordert jedoch einen großen Arbeitsaufwand. Den bekannten Flächenheizelementen ist der Nachteil gemeinsam, daß sie nur umständlich und zeitaufwendig herzustellen sind. Außerdem lassen die in den Plattenkörper eingearbeiteten Rillen Veränderungen der Heizelementführung nicht zu.

Es ist Aufgabe der Erfindung, die Unterbringung des Heizelements im Plattenkörper zu vereinfachen und Voraussetzungen zur veränderbaren knickfreien Führung des Heizelements zu schaffen.

Der Erfindung gemäß ist diese Aufgabe bei einem Heizelement der vorerwähnten Art dadurch gelöst, daß in den Quernuten an den stirnseitigen Enden von zwischen benachbarten Nuten sich erstreckenden Stegen ebene Einsatzkörper eingestellt sind, die durch eine Bogenlinie und eine gerade Sehnenlinie begrenzt sind. Bevorzugt sind zu einer behinderungsfreien Führung des Heizelements, die Quernuten mit zu den Nuten größerer Breite ausgeführt. Das Heizelement bedarf so lediglich einen Plattenkörper mit gradlinigen Rillen, die mit geringem Aufwand herstellbar sind und durch die Einsatzkörper wird eine knickfreie Führung des Heizelements in den Bereichen von Umlenkstellen erreicht. Gleichzeitig geben die Einsatzkörper durch entsprechende Bemessung den Vorteil, daß die Plattenkörper Nuten mit beliebig wechselndem Abstand voneinander aufweisen können. Schließlich erlauben die Einsatzkörper durch abweichend wahlweises Anlegen an den Stegen die Führung des Heizelements im Plattenkörper veränderbar zu gestalten.

In Ausgestaltung des Flächenheizelements ist vorgesehen die Einsatzkörper mit kreisabschnittsförmigen Querschnitten auszubilden, wobei die Längen der Sehnenlinien jeweils den Breiten der Stege entsprechend gewählt sind. Von besonderem Vorteil haben sich Einsatzkörper mit halbkreisförmigen Querschnitten gezeigt, deren Sehnenlinien durch den Breiten der Stege entsprechende Durchmesserlinien gebildet sind. Es versteht sich, die Einsatzkörper zweckmässig in der Dicke der Steghöhe auszuführen. Es ist auch möglich, Einsatzkörper mit zu den Höhen der Stege abweichender Dicke vorzusehen.

Die Einsatzkörper selbst können in den Quernuten in beliebiger Weise ortsfest gehalten sein. So besteht die Möglichkeit, die Einsatzkörper mittels des Heizelementes an den stirnseitigen Enden der Stege zu halten. Eine sichere Fixierung der Einsatzkörper mittels des Heizelements ist dann erzielbar, wenn das Heizelement durch Klemmfedern über Teillängen in den Nuten festgelegt ist. Zweckmäßig sind die Klemmfedern in den Endbereichen der Nuten einbringbar. Die Fixierung der Einsatzkörper in den Quernuten vermittels des Heizelementes läßt sich noch verbessern, wenn die Einsatzkörper in den durch Bogenlinien begrenzten Umfangsflächenabschnitten mindestens eine rillenförmige Einsenkung aufweisen, in die die Heizelemente eintauchen. Außerdem besteht noch die Möglichkeit, die Einsatzkörper z.B. durch Klemmmittel in den Quernuten am Plattenkörper festzulegen.

Nach einer abgewandelten variablen Ausführungsform eines Heizelements ist vorgesehen, die Einsatzkörper durch einen z.B. prismatischen Einsatzkörperteil und durch an den einander gegenüberliegenden Seitenflächen desselben und an den Stegenden eben anliegende, außen durch Bogenlinien begrenzte Einsatzkörperteile zu bilden. Durch die Anwendung bzw. den Austausch entsprehend breiter prismatischer Einsatzkörper ist unter Beibehaltung der durch die Bogenlinien begrenzten beiden Einsatzkörperteile eine einfache Anpassung der Umlenkbereiche an verschiedene Stegbreiten erreichbar.

Schließlich ist noch vorgesehen, die Einsatzkörper bzw. die Einsatzkörperteile aus einem metallischen Werkstoff, z.B. Aluminium als Druckgußteil zu bilden. Besonders vorteilhaft ist jedoch die Verwendung von Kunststoffen. Hierbei kann entweder ein plastisch verformbarer Kunststoff bzw. ein duroplastischer Kunststoff Anwendung finden. Auch ist die Verwendung von steinernen Werkstoffen für die Bildung der Einsatzkörper bzw. Einsatzkörperteile vorgesehen.

Es entspricht der Erfindung, daß das Heizelementent als elektrisches Heizelement, z.B. einen Widerstandsheizdraht mit Silikonüberzug ausgeführt sein kann bzw. durch ein Schlauch- oder Rohrstück für die Durchleitung von erwärmten gas- oder flüssigen Medien gebildet ist.

Die Erfindung ist anhand von Ausführungsbeispielen in der Zeichnung erläutert. Hierin bedeuten:

Fig. 1 ein Flächenheizelement in Draufsicht

Fig. 2 ein Teilstück eines Flächenheizelementes in Draufsicht, vergrößert,

Fig. 3 einen Schnitt nach der Linie III-III der Fig. 2,

Fig. 4 ein Teilstück eines Flächenheizelements in Draufsicht, gemäß anderer Ausführung,

Fig. 5 einen Schnitt nach der Linie V-V der Fig. 4,

Fig. 6 ein Teilstück eines Flächenheizelements gemäß einer weiteren Ausführungsform in Draufsicht,

Fig. 7 einen Schnitt nach der Linie VII-VII der Fig. 6 und

Fig. 8 ein Teilstück eines Flächenheizelements gemäß Fig. 4 in Draufsicht und abgewandelter Aus-Ausführung.

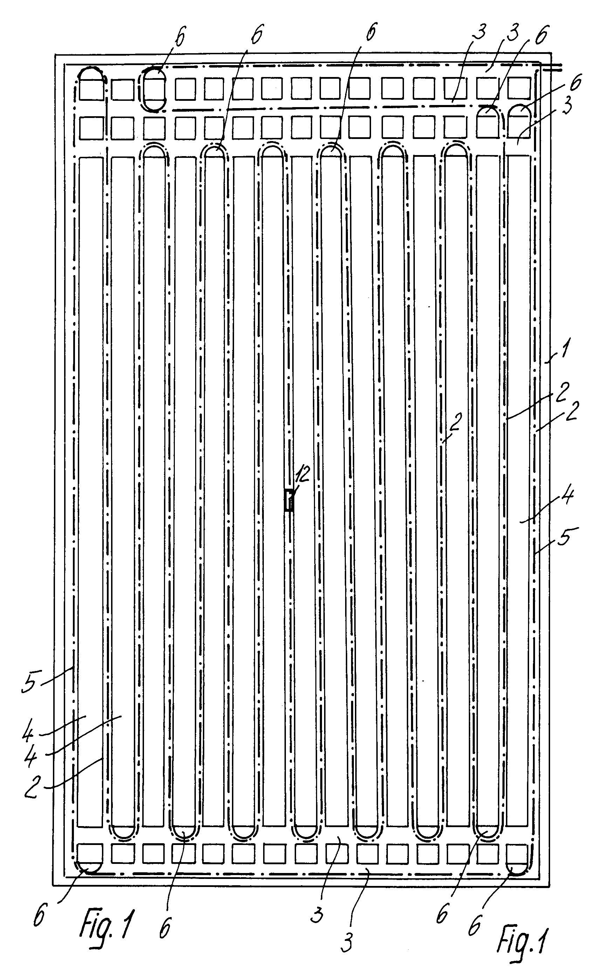

In den Fig. ist mit 1 ein ebener Plattenkörper, z.B. aus Marmor bezeichnet. Der Plattenkörper 1 weist in einer Seitenfläche eine Anzahl im Abstand parallel nebeneinander eingearbeitete Nuten 2 auf. Die Nuten 2 werden in den Endbereichen durch Quernuten 3 gekreuzt. Zwischen den Nuten 2 sind Stege 4 gebildet. Mit 5 ist ein Heizelement bezeichnet, das beliebig, insbesondere als elektrisches Heizelement ausgebildet ist. Die Quernuten 3 sind mit zu den Nuten 2 größerer Breite ausgeführt, und nehmen in den Bereichen der Stegenden Einsatzkörper 6 auf. Die Breite der Quernuten 3 ist dergestalt gewählt, daß das Heizelement 5 behinderungsfrei an den Einsatzkörpern 6 vorbei führbar ist.Beim Ausführungsbeispiel sind die Einsatzkörper 6 mit halbkreisförmigem Querschnitt ausgebildet, wobei die kreisförmig gekrümmten Umfangsflächen 6′der Einsatzkörper 6 der knickfreien Umlenkung des Heizelements 5 dienlich sind, während die geraden Durchmesserlinien 6″ für eine kippfreie Anlage der Einsatzkörper 6 an den stirnseitigen Enden der Stege 4 sorgen. Zur mäanderförmigen Führung des Heizelements 5 in den Nuten 2 und Quernuten 3 sind die Einsatzkörper 6 (Fig. 1) im Wechsel an entgegengesetzten Enden benachbarter Stege 4 angelegt. Durch Verschließen der Nuten 2 und Quernuten 3 mit einem Mörtelwerkstoff ist das Heizelement 5 unverlierbar im Plattenkörper 1 fixiert.

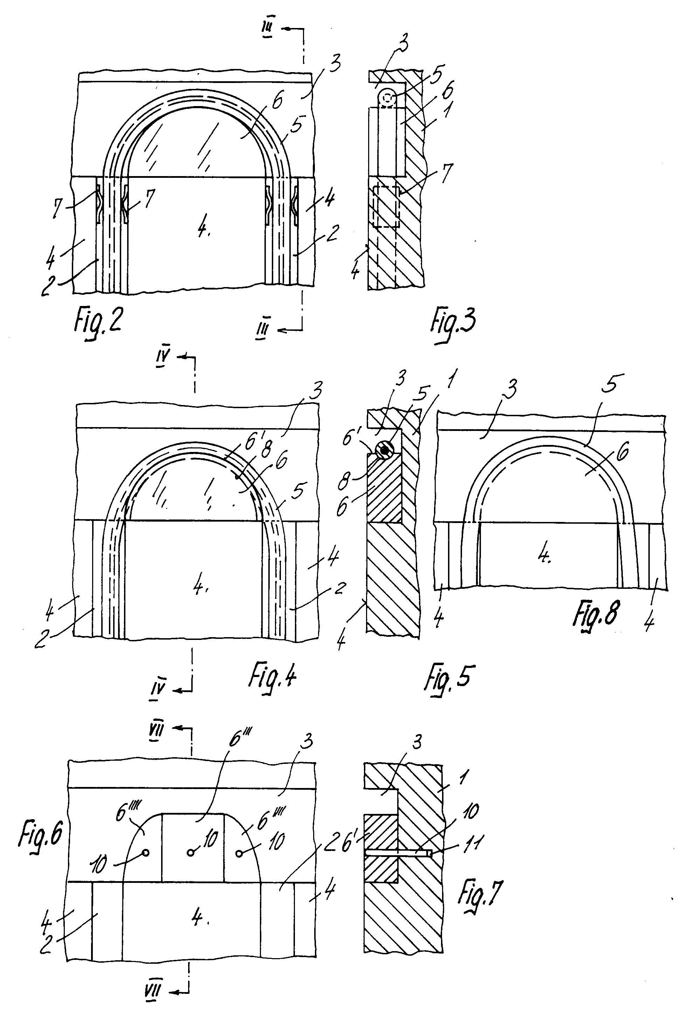

Beim Ausführungsbeispiel der Fig. 1 sind die Einsatzkörper 6 durch das Heizelement 5 selbst an den Enden der Stege 4 angelegt und gehalten. Wie in den Fig. 2 und 3 erkennbar kann diese Halterung der Einsatzkörper 6 dadurch verbessert werden, wenn das Heizelement 5 durch in die Nuten 2 eingeschobene Klemmfedern 7 fixiert ist. Die Klemmfedern 7 können auch mit abgewandelter Ausführung zum Einsatz kommen. Die Klemmfedern 7 bedürfen zu ihrer Anbringung lediglich einfacher Steckvorgänge.

Beim Flächenheizelement der Fig. 4 und 5 ist der Einsatzkörper im bogenförmigen Bereich 6′ mit einer rillenförmigen Einsenkung 8 versehen, durch die das Heizelement 5 hindurchgeleitet ist. Die Wandungen der Einsenkung 8 bilden dabei Führungsflächen für das Heizelement 5 und verhindern ein unbeabsichtigtes Lösen des Heizelements 5 von dem Einsatzkörper 6 bzw. Verschiebungen der Einsatzkörper über die Dauer der Montage. Es versteht sich daß die Einsatzkörper 6 (Fig. 4), mit der Breite der Stege 4 ausgeführt sein können oder wie in Fig. 8 gezeigt, eine Breite aufweisen, bei der der diametrale Abstand der Einsenkungen etwa der Breite der Stege 4 entspricht.

Beim Ausführungsbeispiel der Fig. 6 und 7 ist der Einsatzkörper 6 abweichend mehrteilig gestaltet. An einen prismatischen Einsatzkörperteil 6″ sind an gegenüberliegenden Seiten weitere Einsatzkörperteile 6‴ mit außen bogenförmigen Begrenzungsflächen angestellt. Durch Herumführen des Heizelementes 5 um die Einsatzkörperteile 6″ und 6‴ bleibt das Heizelement 5 knickfrei und der Einsatzkörper 6 am Steg 4 fixiert.

Es besteht aber auch die Möglichkeit, wie in Fig. 7 gezeigt, die Einsatzkörper 6 oder die Einsatzkörperteile 6″, 6‴ mittels Klemmmitteln 9, z. B. Stiften 10, die in Bohrungen 11 des Plattenkörpers 1 eingreifen, am Plattenkörper 1 festzulegen.

Die Einsatzkörper 6 bzw. Einsatzkörperteile 6″, 6‴ ermöglichen, wie in Fig. 1 gezeigt, eine beliebige Anzahl Quernuten 3 vorzusehen und die Führung des Heizelements 5 beliebig zu gestalten. Hierzu sind in den Bereichen der Umlenkstellen in den Quernuten 3 jeweils Einsatzkörper 6, 6″, 6‴ anzuordnen. Die Einsatzkörper 6 geben noch den Vorteil, daß sie durch entsprechende Zuordnung zu Stegen 4 die Führung des Heizelements 5 im Plattenkörper 1 veränderbar gestalten lasen. Schließlich führen die Einsatzkörper auch zu einer besonders einfachen Ausgestaltung des Plattenkörpers 1, da komplizierte Fräsarbeiten entfallen. Mit 12 ist ein Thermoschalter bezeichnet, der als Schutzschalter gegen Überhitzung wirkt.

**Patentansprüche**

1. Flächenheizelement mit einem ebenen Plattenkörper, insbesondere aus Natur- oder Kunststein, dessen Plattenkörper in einer Seitenfläche im Abstand parallel nebeneinander eine Anzahl geradlinige Nuten und in den Endbereichen derselben kreuzende Quernuten aufweist und bei dem die Nuten und Quernuten gemeinsam ein mäanderförmig geschlungenes Heizelement aufnehmen sowie abgerundete Umlenkbereiche für das Heizelement aufweisen, dadurch gekennzeichnet, daß in den Quernuten (3) an den stirnseitigen Enden von zwischen benachbarten Nuten (2) sich erstreckenden Stegen (4) ebene Einsatzkörper (6) eingestellt sind, die durch eine Bogenlinie (6') und eine gerade Sehnenlinie (6") begrenzt sind.

2. Flächenheizelement nach Anspruch 1, dadurch gekennzeichnet, daß die Einsatzkörper (6) mit kreisabschnittsförmigen Querschnitten ausgebildet sind und daß die Längen der Sehnenlinien (6") den Breiten der Stege (4) entsprechen.

3. Flächenheizelement nach Anspruch 1, dadurch gekennzeichnet, daß die Einsatzkörper (6) mit halbkreisförmigen Querschnitten ausgebildet sind und daß die Sehnenlinien (6") durch, den Breiten der Stege (4) entsprechende Durchmesserlinien gebildet sind.

4. Flächenheizelement nach Anspruch 1, dadurch gekennzeichnet, daß die Einsatzkörper (6) in der Dicke mit den Höhen der Stege (4) ausgebildet sind.

5. Flächenheizelement nach einem der Ansprüche 1, 2, 3 oder 4, dadurch gekennzeichnet, daß die Einsatzkörper (6) in den Quernuten (3) fest oder lösbar fest angeordnet sind.

6. Flächenheizelement nach einem der Ansprüche 1, 2, 3 oder 4, dadurch gekennzeichnet, daß die Einsatzkörper (6) mittels des Heizelements (5) an den stirnseitigen Enden der Stege (4) angelegt sind und in den Quernuten (3) fixiert sind.

7. Flächenheizelement nach einem der Ansprüche 1, 2, 3 oder 4, dadurch gekennzeichnet, daß das Heizelement (5) vermittels Klemmfedern (7) über Teillängen in den Nuten (2) festgelegt ist.

8. Flächenheizelement nach einem der Ansprüche 1, 2 oder 3, dadurch gekennzeichnet, daß die Einsatzkörper (6) in den durch Bogenlinien (6') begrenzten Umfangsflächen mindestens eine rinnenförmige Einsenkung (8) aufweisen, und daß durch Eintauchen des Heizelements (5) in den Einsenkungen (8) die Einsatzkörper (6) in den Quernuten (3) fixiert sind.

9. Flächenheizelement nach einem der Ansprüche 1, 2 oder 3, dadurch gekennzeichnet, daß die Einsatzkörper (6) durch Klemmittel (9) in den Quernuten (3) am Plattenkörper (1) festgelegt sind.

10. Flächenheizelement nach Anspruch 1, dadurch gekennzeichnet, daß die Einsatzkörper (6) durch einen prismatischen Einsatzkörperteil (6"') und durch an den einander gegenüberliegenden Seitenflächen desselben und an den stirnseitigen Enden der Stege eben anliegende, außen durch Bogenlinien begrenzte Einsatzkörperteile (6"'') gebildet sind.

11. Flächenheizelement nach Anspruch 1 oder 10, dadurch gekennzeichnet, daß die Einsatzkörper (2) bzw. Einsatzkörperteile (6"'. 6"'''') aus einem metallischen Werkstoff gebildet sind.

12. Flächenheizelement nach Anspruch 1 oder 10, dadurch gekennzeichnet, daß die Einsatzkörper (6) bzw. Einsatzkörperteile (6"', 6"'''') aus einem plastisch verformbaren Kunststoff gebildet sind.

13. Flächenheizelement nach Anspruch 1 oder 10, dadurch gekennzeichnet, daß die Einsatzkörper (6) bzw. Einsatzkörperteile (6"', 6"'''') aus einem Duroplast gebildet sind.

14. Flächenheizelement nach Anspruch 1 oder 10, dadurch gekennzeichnet, daß die Einsatzkörper (6) bzw. Einsatzkörperteile (6"', 6"'''') aus einem steinernen Werkstoff gebildet sind.

15. Flächenheizelement nach Anspruch 1, dadurch gekennzeichnet, daß als Heizelement ein elektrischer Widerstandsheizdraht mit einem Überzug, z.B. aus Silikon, dient.

16. Flächenheizelement nach Anspruch 1, dadurch gekennzeichnet, daß die Quernuten (3) mit zu den Nuten (2) größerer Breite ausgebildet sind.

**Claims**

1. Flat-shaped heating element, comprising a flat panel, more especially formed from natural or artificial stone, the panel of which element has a number of rectilinear grooves in one lateral surface, which grooves extend parallel to one another with a spacing therebetween, and said panel has intersecting transverse grooves in the end regions of said rectilinear grooves, and wherein the grooves and transverse grooves together accommodate a heating element, which is looped round in a meandering manner, and have rounded deflection regions for the heating element, characterised in that flat insert members (6), which are defined by an arcuate line (6') and a straight chord (6''), are inserted in the transverse grooves (3) at the front ends of ribs (4), which extend between adjacent grooves (2).

2. Flat-shaped heating element according to claim 1, characterised in that the insert members (6) are provided with part-circular cross-sections, and in that the lengths of the chords (6'') correspond to the widths of the ribs (4).

3. Flat-shaped heating element according to claim 1, characterised in that the insert members (6) are provided with semicircular cross-sections, and in that the chords (6'') are formed by diametral lines, which correspond to the widths of the ribs (4).

4. Flat-shaped heating element according to claim 1, characterised in that the thickness of the insert members (6) corresponds to the height of the ribs (4).

5. Flat-shaped heating element according to one of claims 1, 2, 3 or 4, characterised in that the insert members (6) are disposed in the transverse grooves (3) in a secure or detachably secure manner.

6. Flat-shaped heating element according to one of claims 1, 2, 3 or 4, characterised in that the insert members (6) abut against the front ends of the ribs (4) by means of the heating element (5) and are secured in the transverse grooves (3).

7. Flat-shaped heating element according to one of claims 1, 2, 3 or 4, characterised in that the heating element (5) is secured in the grooves (2) over part of its length by means of clamping springs (7).

8. Flat-shaped heating element according to one of claims 1, 2 or 3, characterised in that the insert members (6) have at least one duct-like indentation (8) in the circumferential areas defined by arcuate lines (6'), and in that the insert members (6) are secured in the transverse grooves (3) as a result of the heating element (5) being inserted in the indentations (8).

9. Flat-shaped heating element according to one of claims 1, 2 or 3, characterised in that the insert members (6) are secured on the panel (1) by clamping means (9) provided in the transverse grooves (3).

10. Flat-shaped heating element according to claim 1, characterised in that the insert members (6) are formed by a prismatic insert member portion (6''') and by insert member portions (6''''), which abut in a flat manner against the oppositely situated lateral surfaces thereof and against the front ends of the ribs and are externally defined by arcuate lines.

11. Flat-shaped heating element according to claim 1 or claim 10, characterised in that the insert members (6) or respectively insert member portions (6''', 6'''') are formed from a metallic material.

12. Flat-shaped heating element according to claim 1 or claim 10, characterised in that the insert members (6) or respectively insert member portions (6''', 6'''') are formed from a plastically deformable plastics material.

13. Flat-shaped heating element according to claim 1 or 10, characterised in that the insert members (6) or respectively insert member portions (6''', 6'''') are formed from a thermosetting plastics material.

14. Flat-shaped heating element according to claim 1 or 10, characterised in that the insert members (6) or respectively insert member portions (6''', 6'''') are formed from a stone material.

15. Flat-shaped heating element according to claim 1, characterised in that an electric resistance heating wire, provided with a coating, e.g. of silicone, serves as the heating element.

16. Flat-shaped heating element according to claim 1, characterised in that the transverse grooves (3) are wider than the rectilinear grooves (2).

**Revendications**

1. Elément de chauffage de grande surface, comportant un corps en plaque plan, en particulier en pierre naturelle ou artificielle, dont le corps en plaque présente une pluralité de gorges rectilignes, disposées à distance et parallèlement l'une à côté de l'autre dans une face latérale, et, dans les zones d'extrémité de celles-ci, des gorges transversales les croisant, et dans lequel les gorges et les gorges transversales reçoivent, ensemble, un élément de chauffage disposé en forme de méandre, et

présent des zones de renvoi arrondies pour l'élément de chauffage,
caractérisé en ce que, dans les gorges transversales (3), aux extrémités frontales de nervures (4) s'étendant entre des gorges (2) voisines, sont prévus des corps d'insertion plans (6), qui sont limités par une ligne courbe (6') et une ligne de corde droite (6").

2. Elément de chauffage selon la revendication 1, caractérisé en ce que les corps d'insertion (6) présentent des sections transversales en forme de segment de cercle, et en ce que les longueurs des cordes (6") correspondent aux largeurs des nervures (4).

3. Elément de chauffage selon la revendication 1, caractérisé en ce que les corps d'insertion (6) présentent des sections transversales semi-circulaires, et en ce que les cordes (6") sont formées par des diamètres correspondant aux largeurs des nervures (4).

4. Elément de chauffage selon la revendication 1, caractérisé en ce que les corps d'insertion (6) présentent une épaisseur correspondant à la hauteur des nervures (4).

5. Elément de chauffage selon une des revendications 1, 2, 3 ou 4, caractérisé en ce que les corps d'insertion (6) sont agencés dans les gorges transversales (3) de façon amovible ou non.

6. Elément de chauffage selon une des revendications 1, 2, 3 ou 4, caractérisé en ce que les corps d'insertion (6) sont mis en place aux extrémités frontales des nervures (4) et fixés dans les gorges transversales (3) au moyen de l'élément de chauffage (5).

7. Elément de chauffage selon une des revendications 1, 2, 3 ou 4, caractérisé en ce que l'élément de chauffage (5) est fixé dans les gorges (2) au moyen de ressorts de serrage (7) sur des longueurs partielles.

8. Elément de chauffage selon une des revendications 1, 2 ou 3, caractérisé en ce que les corps d'insertion (6) présentent au moins une empreinte (8) en forme de gouttière, dans les surfaces périphériques limitées par les lignes courbes (6'), et en ce que les corps d'insertion (6) sont fixés dans les gorges transversales (3) par enfoncement de l'élément de chauffage (5) dans les empreintes (8).

9. Elément de chauffage selon une des revendications 1, 2 ou 3, caractérisé en ce que les corps d'insertion (6) sont fixés au corps en plaque (1), dans les gorges transversales (3), par des moyens de serrage (9).

10. Elément de chauffage selon la revendication 1, caractérisé en ce que les corps d'insertion (6) sont formés par une partie de corps d'insertion prismatique (6"') et par des parties de corps d'insertion (6"") limitées extérieurement par des lignes courbes, et adjacentes aux extrémités frontales des nervures et aux surfaces latérales opposées de la partie (6"').

11. Elément de chauffage selon la revendication 1 ou 10, caractérisé en ce que les corps d'insertion (6) ou les parties (6"', 6"") de ceux-ci sont formés à partir d'un matériau métallique.

12. Elément de chauffage selon la revendication 1 ou 10, caractérisé en ce que les corps d'insertion (6) ou les parties (6"', 6"") de ceux-ci sont formés à partir d'une matière synthétique plastiquement déformable.

13. Elément de chauffage selon la revendication 1 ou 10, caractérisé en ce que les corps d'insertion (6) ou les parties (6"', 6"") de ceux-ci sont formés à partir d'une résine thermodurcissable.

14. Elément de chauffage selon la revendication 1 ou 10, caractérisé en ce que les corps d'insertion (6) ou les parties (6"', 6"") sont formés à partir d'une matière en pierre.

15. Elément de chauffage selon la revendication 1, caractérisé en ce que, en tant qu'élément de chauffage, on utilise un fil électrique de chauffage à résistance ayant un revêtement, par exemple, de silicone.

16. Elément de chauffage selon la revendication 1, caractérisé en ce que les gorges transversales (3) présentent une plus grande largeur que les gorges (2).

Fig. 1

Fig.1

Fig.2

Fig.3

Fig.4

Fig.5

Fig.8

Fig.6

Fig.7